Europäisches Patentamt

European Patent Office

Office européen des brevets

(11) Publication number : **0 488 635 A2**

(12) **EUROPEAN PATENT APPLICATION**

(21) Application number : **91310856.9**

(22) Date of filing : **26.11.91**

(51) Int. Cl.⁵ : **B29D 30/06**

(30) Priority : **30.11.90 JP 338912/90**

(43) Date of publication of application :
**03.06.92 Bulletin 92/23**

(84) Designated Contracting States :
**DE FR GB**

(71) Applicant : **SUMITOMO RUBBER INDUSTRIES
LIMITED
No. 1-1, Tsutsui-cho 1-chome
Chuo-ku Kobe-shi Hyogo 651 (JP)**

(72) Inventor : **Asano, Kenji
12 Aza Honen
Shirakawa-shi, Fukushima (JP)**
Inventor : **Kubota, Akinori
1-2, Ryugadai 1-chome
Suma-ku, Kobe-shi, Hyogo (JP)**
Inventor : **Wakitani, Yoshinori
12, Aza Honen
Shirakwa-shi, Fukushima (JP)**

(74) Representative : **Stewart, Charles Geoffrey et
al
SP TYRES UK LIMITED Tyre Technical
Division
Fort Dunlop, Erdington, Birmingham B24 9QT
(GB)**

(54) **Process for vulcanising elastomeric article and apparatus for the same.**

(57)   An apparatus for vulcanising an elastomeric articles (e.g. a tyre) by placing it in a mould disposed in an openable and closable dome and supplying a heating medium into the dome so as to heat the mould from outside, the apparatus comprising a heating medium supply system for supplying, after closure of the dome, the heating medium at a higher temperature than a predetermined vulcanising temperature into the dome and subsequently supplying the heating medium at the predetermined vulcanising temperature to complete vulcanisation.

FIG.1

EP 0 488 635 A2

This invention relates to a process for vulcanising an elastomeric article and to an apparatus therefor.

To mould and cure a tyre there has been used a process which comprises placing an unvulcanised tyre in a mould disposed in an openable and closable dome, and supplying a heating medium such as steam into the dome to heat the mould from outside, thereby heating and vulcanising the tyre in the mould (see, for example, Unexamined Japanese patent publication HEI 1-184106).

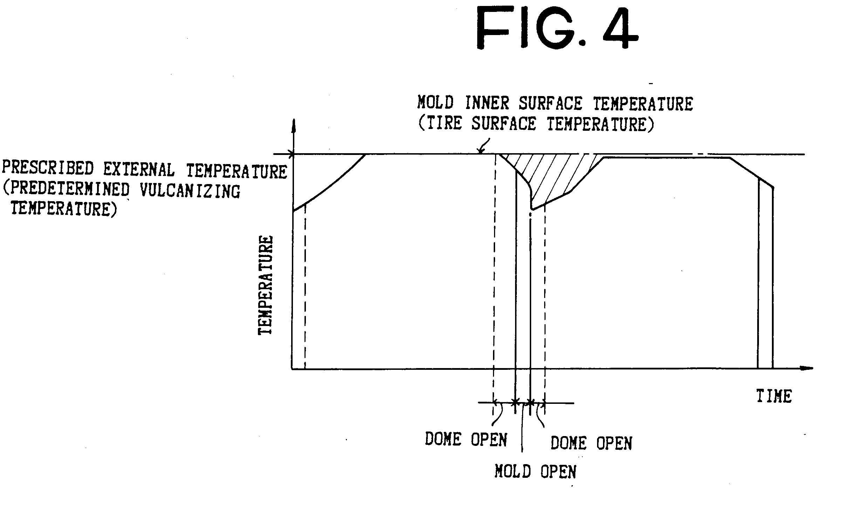

In the above conventional process, a heating medium at a fixed temperature is introduced into the dome and, accordingly, the inner surface temperature of the mould (i.e. the tyre surface temperature) is as shown in Figure 4.

When a vulcanising cycle comprising the steps of opening the dome after completion of the preceding vulcanisation, opening the mould, removing the vulcanised tyre from the mould, then placing an unvulcanised tyre into the mould, closing the mould, closing the dome, and supplying the heating medium at a fixed temperature into the dome is repeated according to the prior art, the opening and closing of the dome is attended by a lowering in the inner surface temperature of the mould.

In the conventional process, this mould temperature is lowered due to there being no supply of the heating medium into the mould while the dome is open in the stages of opening and closing the mould. Thus, the conventional process has the drawback of poor heat supply to the tyre in the first stage of vulcanisation (namely, there is a slow temperature rise characteristic).

The conventional process also has the drawback that it takes a long time to initially heat the mould up to a predetermined vulcanising temperature, resulting in a long cycle time.

It is an object of this invention to provide a process for vulcanising an elastomeric article which overcomes the aforementioned drawbacks of the prior art by improving the mould temperature rise performance.

Accordingly this invention provides a process for vulcanising an elastomeric article which comprises the steps of placing the elastomeric article in a mould disposed in an openable and closable dome, and supply a heating medium at a predetermined heating temperature into the dome so as to heat the mould from outside, wherein the dome is supplied, after closure thereof, with the heating medium at a higher temperature than the predetermined heating temperature and thereafter with the heating medium at the predetermined heating temperature.

One method comprises using saturated steam as the heating medium and regulating the pressure of the steam, thereby controlling the temperature of the heating medium supplied into the dome.

According to another aspect of this invention, there is provided an apparatus for vulcanising an elastomeric article by placing the elastomeric article in a mould disposed in an openable and closable dome and supplying a heating medium into the dome so as to heat the mould from the outside , the apparatus comprising heating medium supply means for supplying, after closure of the dome, the heating medium at a higher temperature than a predetermined heating temperature into the dome and subsequently supplying the heating medium at the predetermined heating temperature into the dome.

The heating medium supply means may comprise a supply pipe for supplying the heating medium into the dome, a pressure control valve disposed in the supply pipe, and means for controlling the operation of the pressure control valve to achieve pressure control.

The control means may comprises means for detecting the temperature inside the dome, and means for comparing the temperature detected by the detecting means with a set point and operating the pressure control valve. The vulcanising apparatus may further comprise a heat source for supplying saturated steam at a predetermined temperature and a predetermined pressure into the supply pipe.

Preferably the process and apparatus are applied to curing a tyre.

According to this invention, the dome closed is supplied with the heating medium which is at a higher temperature than a predetermined heating temperature, so that the mould temperature is raised at a higher rate. Then, when the mould inner surface has approached the predetermined vulcanising temperature, the heating medium temperature is reduced to the predetermined heating temperature and supplied to the mould.

The supply of the heating medium in two stages ensures an accelerated temperature rise in the first stage of heating, resulting in a shortened cycle time.

According to this invention, the heating medium is thus supplied in two stages, the first one of which consists in supplying the heating medium at a higher temperature than the prescribed temperature for a predetermined time, whereby a large quantity of heat is supplied in the initial stage of vulcanisation, so as to accelerate the rise in the inner surface temperature of the mould at the initial stage. This ensures a shorter vulcanising time.

One preferred embodiment will now be described by way of example only in conjunction with the following diagrammatic drawings in which:

Figure 1 shows a block diagram of a vulcaniser;
Figure 2 is a graph showing the relationship between the inner surface temperature of the mould and time;
Figure 3 is a graph showing the relationship between the degree of vulcanisation and time; and
Figure 4 is a graph showing the relationship between the inner surface temperature of the mould and time in the conventional process.

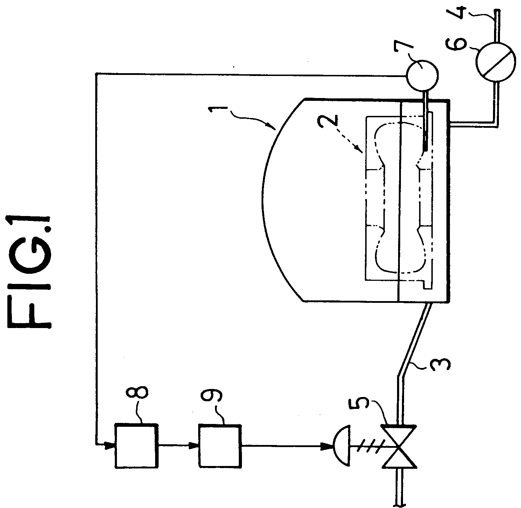

In Figure 1, there is shown a dome-type tyre vulcaniser for use in the process of this invention. The vulcaniser comprises a dome 1 which can be opened and closed as desired. In the dome 1 is placed a mould 2 having an upper and a lower part, which can be opened and closed in the vertical direction. The mould 2 is provided therein with a cavity in which an unvulcanised tyre, as an elastomeric articles, may be positioned.

The dome 1 is connected to a supply pipe 3 and a discharge pipe 4, for the supply and discharge of heating medium. The supply pipe 3 is fitted with a diaphragm-type control valve 5 whereas the discharge pipe 4 is provided with a trap 6. The dome 1 is equipped with a thermocouple temperature detection means 7 for measuring the temperature inside the dome 1 or the temperature of the mould 2.

The temperature detection means 7 is connected to a temperature controller 8. An electrical output signal from the temperature controller 8 is converted by an electropneumatic converter 9 into a pneumatic output signal, which serves to control the opening of the control valve 5.

To the heating medium supply pipe 3 is connected a heat source, not shown. The heat source is designed to supply input steam at a predetermined pressure and thus predetermined temperature into the supply pipe 3.

The temperature detection means 7, the temperature controller 8, the electropneumatic converter 9, the control valve 5, the heating source and the like constitute a heating medium supply system.

The vulcanising process vulcaniser having the above apparatus is carried out as follows.

First, the dome 1 is opened, then the mould 2 is opened, and an unvulcanised tyre is placed into the mould 2. Next, the mould 2 is closed, the dome 1 is closed, and saturated steam at a predetermined temperature and a predetermined pressure is supplied from the heat source into the supply pipe 3. The temperature controller 8 has reference values set therein so as to supply the dome 1 with the heating medium at a temperature higher than the predetermined vulcanising temperature for the tyre by a prescribed value and thus higher temperature is maintained. According to a feedback signal from the temperature detection means 7, the temperature controller 8 operates the control valve 5 so that the temperature of the heating medium being supplied into the dome 1 is maintained at the temperature higher than the predetermined vulcanising temperature by the prescribed value. Because saturated steam has a fixed correlation between pressure and temperature, the temperature of the steam on the output side of the valve 5 can be controlled by regulating the steam pressure on the output side by the valve 5, even though the temperature of the primary-side steam supplied from the heat source remains constant.

The time of supplying the higher temperature heating medium is controlled by a timer.

After the lapse of a predetermined time, the temperature controller 8 acts to operate the valve 5 so as to lower the output pressure and thud bring the temperature of the output steam to the predetermined vulcanising temperature. The heating medium at the predetermined vulcanising temperature is thus supplied into the dome 1, and the previously unvulcanised tyre in the mould 2 is vulcanised. The heating medium is supplied for a predetermined time, to complete the vulcanisation of the tyre.

When the vulcanisation is finished, the supply of the heating medium is stopped. The dome 1 and the mould 2 are opened, and the vulcanised tyre is removed therefrom.

One cycle of tyre vulcanisation is completed in this manner. Subsequently, a new vulcanised tyre is placed into the mould, and the next cycle is started.

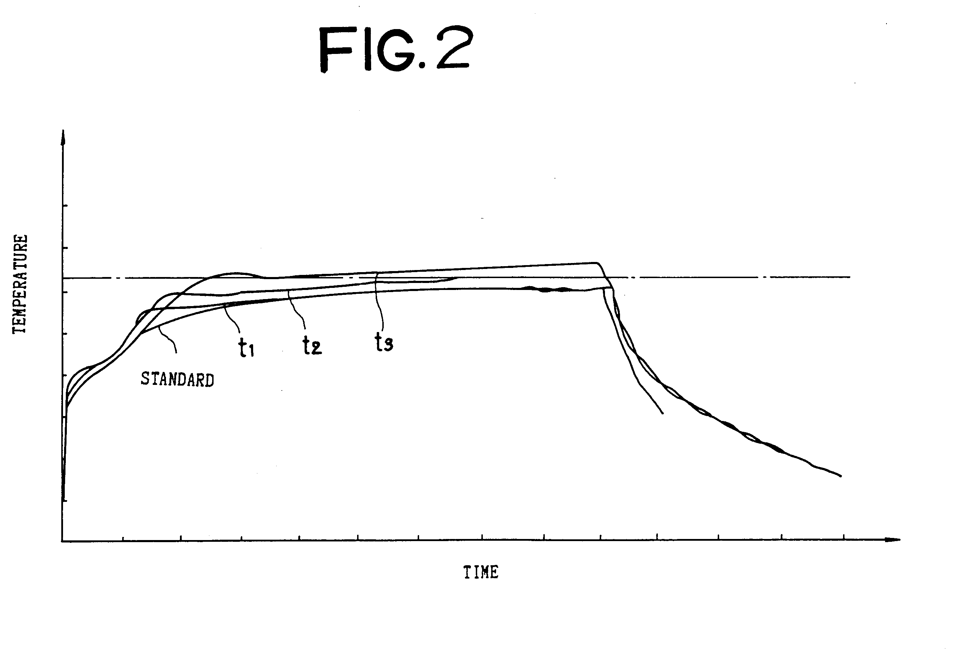

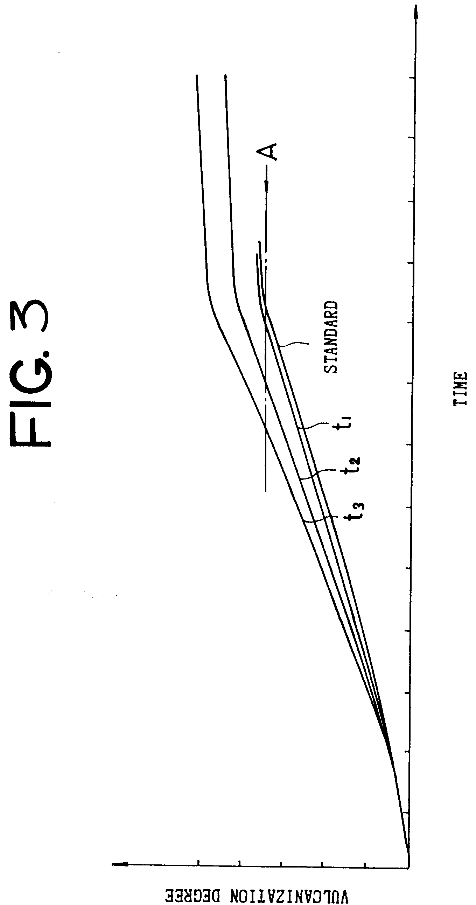

Figure 2 is a graph showing the relationship between the inner surface temperature of the mould 2 (the tyre surface temperature) and time, and Figure 3 is a graph showing the relationship between the degree of vulcanisation and time, in one cycle.

In each of Figures 2 and 3, the curve denoted by "STANDARD" pertains to the case where a heating medium at a constant temperature is supplied according to the prior art process, whereas the curves marked with $t_1$, $t_2$ and $t_3$ pertain to the process according to this invention and represent the results obtained by supplying the higher temperature heating medium in the first stage for respective periods of time $t_1$, $t_2$ and $t_3$ ($t_1 < t_2 < t_3$).

In the vulcanisation degree vs. time graph shown in Figure 3, line A represents a prescribed degree of vulcanisation.

As is apparent from Figures 2 and 3, the supply of heating medium in two stages according to the process of this invention enables the target degree of vulcanisation to be reached in a shorter time than in the conventional process.

The above embodiment is not to be construed as limiting this invention and it may be applied to vulcanising articles other than tyres.

**Claims**

1. A process for vulcanising an elastomeric article which comprises the steps of placing the elastomeric article in a mould (2) disposed in an openable and closable dome (1), and supplying a heating medium at a predetermined heating temperature into the dome (1) so as to heat the mould (2) from outside, characterised in that the dome (1) is supplied, after closure thereof, with the heating medium at a higher temperature than the predetermined vulcanising temperature and thereafter with the heating medium at the predetermined vulcanising temperature.

2. The process of claim 1 characterised by the heating medium being saturated steam; and the temperature of the steam supplied into the dome (1) being changed over from the higher temperature to the predetermined vulcanising temperature by regulating the pressure of the steam supplied into the dome (1).

3. An apparatus for vulcanising an elastomeric articles in a mould (2) disposed in an openable and closable dome (1) into which is supplied a heating medium so as to heat the mould from the outside, the apparatus being characterised by heating medium supply means (4) for supplying, after closure of the dome (1), heating medium at a higher temperature than a predetermined vulcanising temperature and subsequently supplying the heating medium at the predetermined vulcanising temperature.

4. The apparatus of claim 3 characterised by the heating medium supply means comprising a supply pipe (4) for supplying the heating medium into the dome (1), a pressure control valve (6) disposed in the supply pipe, and means (7) for controlling the operation of the pressure control valve (5) to achieve pressure control.

5. The apparatus of claim 4 wherein the control means is characterised by means (7) for detecting the temperature inside the dome, and means for comparing the temperature detected by the detecting means with a set point and operating the pressure control valve (6).

6. The apparatus of any of claims 3 to 5 characterised by a heat source supplying saturated steam at a predetermined temperature and a predetermined pressure into the supply pipe (4).

FIG.1

# FIG.2

# FIG. 3

FIG. 4